# NEW EUROPEAN PATENT SPECIFICATION

(11) **EP 0 147 912 B2**
(45) Date of publication and mention of the opposition decision: **15.06.1994**
(45) Mention of the grant of the patent: 11.05.1988
(21) Application number: 84305491.7
(22) Date of filing: 13.08.1984
(51) Int. Cl.: B22D 11/06, B29C 41/26

(54) **Melt overflow system for producing filamentary or fiber products directly from molten materials**
Schmelzüberlaufsystem zur direkten Herstellung von faser- oder fadenförmigen Produkten aus geschmolzenen Materialien
Système de trop plein pour matières fondues permettant la fabrication de fibres ou de filaments directement à partir de matières fondues

(30) Priority: 14.12.1983 US 561309
(43) Date of publication of application: 10.07.1985
(73) Proprietor: RIBBON TECHNOLOGY CORPORATION, Gahanna, Ohio 43230 (US)
(72) Inventor: Dunlap, David L., Columbus Ohio 43227 (US); Hackman, Lloyd E., S. Worthington Ohio 43085 (US); Dickson, James, Stirling New Jersey 07980 (US); Handshey, Mark E., Lithopolis Ohio 43136 (US)
(74) Representative: Thomson, Paul Anthony

(56) References cited:
- EP-A- 0 040 072
- DE-C- 674 691
- GB-A- 20 518
- GB-A- 26 260
- LU-A- 41 286
- US-A- 993 904
- US-A- 3 871 439
- PATENTS ABSTRACTS OF JAPAN, vol.4, no.111, (M-25) (593), August 9, 1980
- PATENTS ABSTRACTS OF JAPAN, vol.7, no.124, (M-218) (1269), May 28, 1983

## Description

### Field Of The Invention

This invention is directed generally to a method and apparatus for producing filamentary or fibrous materials and more particularly relates to a system for producing such materials directly from a molten material, such as metals, polymers and ceramics by moving the surface of a chilled substrate past a region of contact with the molten material to form a rapidly solidifying layer of the material on the substrate and then cooling the layer and removing it from the substrate.

### Background Art

The prior art discloses a variety of methods and apparatus which produce solid material directly from a source of molten material. Most prior art systems are forthe fabrication of metal products and use some type of fixed, rigid, noncontrollable forming orifice to stabilize the dimensions of the product.

Atypical system of this type is illustrated in U.S. Patent 2,825,108 to Conn in which molten metal is made into a filamentary form by forcing it through an orifice so as to generate a free standing stream of molten material which is subsequently solidified into filamentary form on a rotating, heat extracting member. The rate of production is determined by the rate at which the molten material is expelled from the orifice and for continuous filament this rate must be approximately synchronous with the rate of movement of the heat extracting member at its point of contact with the filament.

Techniques of this type are troubled by the relative complexity of the necessary process control system and the difficulty in passing a molten material through fixed, small orifices. The orifices must be constructed from an exotic material if the molten material has a relatively high melting point. The orifices have a tendency to erode and/or become partially or completely blocked due to the deposit of material on the orifice.

An improvement is disclosed in U.S. Patent 3,838,185 to Maringer et. al. That patent discloses a disk-like heat extracting substrate which is rotated and lowered into the upper surface of a molten material. The peripheral edge of the disk-like substrate moves generally parallel to the surface of the molten material. More specifically, the edge moves slightly downwardly through the surface of the melt into a region of contact and then moves upwardly and out of the melt carrying a layer of molten material which is then chilled as the wheel rotates and carries it away from the surface of the molten material. After the layer is solidified, it is removed from the substrate in the form of a filamentary product without the use of forming orifices.

One difficulty with this system, however, is that, because the heat extracting substrate is inserted downwardly into the surface of the melt, the melt surface must be open and exposed to the atmosphere. This exposure to the atmosphere is a major source of heat loss and therefore increases the energy required to maintain the molten material surface at a suitably high temperature for proper operation of the system. Second, the exposure of the molten material to the atmosphere provides a source of contamination which may be introduced in to the molten material from the atmosphere, permits the escape of relatively volatile constituents from the molten material and allows oxidation reactions to occur at the surface of the melt. It is therefore difficult to maintain a constant chemical composition in the molten material. Further, this system permits limited control because the region of contact of the melt with the substrate must always be at the lower-most segment of the substrate. Thus, control of the process is limited to control of the substrate speed, depth of penetration of the substrate into the surface of the molten material and temperature.

A second system for overcoming some of these objectionable characteristics is disclosed in U.S. Patent 3,896,203 to Maringeret. al. In this system a melted drop of material is adhered to a solid member by means of the molecular attraction of the molten material for the solid member to form an adherent pendant drop. The drop is suspended from the solid member. The drop remains adherent because the net molecular attraction force is greater than the net gravitational force on the drop. The adherent pendant drop is then contacted by a rotating heat-extracting member. The pendant drop may be formed by locally heating the end of a solid member of the material to melt the end. Alternatively, the pendant may be formed, adhered to and suspended from an orifice through which melt is forced, for example by the pressure head exerted by a height of molten material above the orifice.

A variety of difficulties have been encountered in connection with the pendant drop system. A component of the shear forces exerted on the adhered drop by the rotating heat extracting member adds to the gravitational forces and together they tend to detach the drop from the solid member. Furthermore, because the drop was suspended from the solid member by gravity, the rotating substrate normally was beneath or partly beneath the drop. Upon contact of the molten material with the heat-extracting substrate, gravitational forces acted in a direction to move the molten material onto the entire surface of the rotating substrate. If the substrate was of the type having a plurality of raised ridges on its peripheral surface for forming filamentary products on the crests of these ridges, the melt would also flow by gravity down in between the ridges to form ribbons or sheets. Further, if the pendant drop is formed at the end of a piece of solid material from which the droplet is formed by local heating, then an additional manufacturing step is needed. The raw material must first be formed into solid rods or other geometrical shapes and then later locally melt to form the drop. This is not only an extra production step but requires additional energy.

GB-A-26260 discloses a method for producing solid material from a source of molten material wherein a heat extracting substrate is rotated about its axis and its smooth outer surface is moved past an edge of the upper surface of a pool of molten material so that the molten material solidifies on the outer surface and is then removed therefrom.

US-A-3,871,439 discloses a method of making fine filamentary material directly from molten material by rotating the peripheral edge of a machine - threaded cylindrical heat-extracting member in contact with the surface of the molten material.

It is an object of the present invention to overcome the mentioned disadvantages of the previously utilised systems.

According to the present invention there is provided a method for producing filaments orfibers from a molten material, said method comprising rotating a heat extracting substrate about its substantially horizontal axis of symmetry and moving its outer surface having helically disposed adjacent ridges formed thereon past a region of contact with an edge forming a melt front of the upper surface of a pool of said molten material so that said molten material solidifies on the outer surface and is then removed therefrom, said helically disposed adjacent ridges being caused by the rotation of the substrate to carry out an apparent motion with respect to the surface edge transversely migrating along a generating line of said substrate interfacing the melt front.

Also in accordance with the present invention there is provided an apparatus for producing filaments orfibers from a molten material, the apparatus comprising a receptacle for containing a pool of molten material, said receptacle including a wall portion having an upper generally horizontal edge forming a melt front relatively lower than the top of said receptacle and over which molten material may be overflowed, a heat extracting substrate spaced from said edge and mounted to be contacted by the overflowed molten material, at the level of the upper surface of the molten material, the substrate being formed as a symmetrical substrate about its axis and having helically disposed adjacent ridges formed on the outer surface thereof and means for continuously moving the outer surface of said substrate past the region of its contact with said melt by drivingly rotating it about its substantially horizontal axis of symmetry said helically disposed adjacent ridges being caused to carry out an apparent motion with respect to the surface edge transversely migrating along a generating line of said substrate interfacing the melt front by the rotation of the substrate.

The invention is an improved method and an improved apparatus for producing filamentary or fibrous material directly from a molten material by moving the surface of a heat-extracting substrate having helically disposed adjacent ridges formed on said surface, past a region of contact with the molten material to form the filamentary or fibrous material on the substrate, then cooling the material and removing it from the substrate.

In the present invention the substrate surface having helically disposed adjacent ridges thereon is moved along a region of contact at an edge of the upper surface of the molten material in the direction generally transversely to the plane of the molten material surface. Bounding the region of contact is an upper meniscus which is adjacent the upper surface of the molten material.

The method is best accomplished using a receptacle for containing the molten material. The receptacle includes a portion of the wall of the receptacle which has an upper, generally horizontal edge which is relatively lower than the top of the receptacle. The molten material is filled to a level such that it overflows this edge. A movably mounted heat extracting substrate having helically disposed adjacent ridges thereon is spaced from the edge and mounted to be contacted by the overflowed molten material substantially at the level of the upper surface of the molten material.

The moving substrate surface is effectively substituted for a portion of the container wall which is absent above the substantially horizontal edge. The melt is overflowed against that substrate surface.

An advantage of the present invention is that no drop is formed and therefore there is no drop to be subject to detachment by gravity. Further, the gravitational force exerted upon the molten material at its region of contact with the moving substrate is generally opposite to the shear forces exerted upon the molten material by the movement of the chilled substrate past this region of contact. Gravitational forces are not applied in a direction urging molten material down into the valleys between ridges formed on the substrate. This also allows the substrate to move at a higher velocity past its region of contact with the molten material thereby increasing production rates. The present invention more rapidly solidifies the molten material than can be done with conventional melt extraction and permits the manufacture of finer wire products.

A further advantage is that the surface of the molten material may be covered with a protective barrier and insulative cover to isolate the melt from the atmosphere since only the edge of that melt surface need be in contact with the heat-extracting substrate.

Furthermore, the substrate may be of the cylindrical, belt or disk type and can be adjustable both vertically with respect to the melt surface and laterally for varying the spacing of the substrate from the overflow edge. This permits improved control of the formation of the products and their trajectory as they are removed from the substrate. A rotating substrate of circular cross section may have its region of contact with the molten material positioned at almost any of the 360° of angular positions about its periphery.

Products of the invention are made without the use of a forming orifices or the need for an extra pre- patory manufacturing step of preparing solid materials for localized melting to form a drop.

A further advantage of the present invention is that it permits the use of skull melting with directed energy beams for reactive metals or metals requiring a high purity. In addition, the chill from the substrate can quench, slag or metal at the overflow region. The system is designed for sufficient melt to provide chemical control and homogeneity of the resulting product while giving surface stability and reducing thermal currents. A protective atmosphere can be introduced to push the overflow melt front against the substrate as may be needed and can be used to provide a controlling head.

The advent of fiber reinforced composites has created a demand for filamentary material of refacto- ry metals and alloys. However, these materials are extremely difficult to form by conventional mechanical methods into filaments. The present invention has been found to be capable of forming such filamentary products with these materials in sizes as low as 15 microns in effective diameter. Thus, making these products available at considerably reduced cost.

### Description of The Drawings.

Figs. 1-4 are diagramatic illustrations of the principles of the present invention.
Fig. 5 is an enlarged view in vertical section illustrating a melt front forming a region of contact of the melt with a heat-extracting chilled substrate.
Fig. 6 is a view in vertical section through the melt receptacle and a cylindrical rotating substrate.
Fig. 7 is a top plan view of the embodiment of Fig. 6 except that the structure is modified to produce wire.
Fig. 8 is a side view of a cylindrical chilled substrate which is utilized in accordance with the present invention.
Fig. 9 is an exploded view in perspective illustrating the preferred embodiment of the invention.
Fig. 10 is a view in perspective illustrating an alternative embodimentofthe invention utilizing directed energy beams for heating the molten material.

In describing the preferred embodiment of the invention, which is illustrated in the drawings, specific terminology will be resorted to for the sake of clarity. However, it is not intended that the invention be limited to the specific terms so selected end it is to be understood that each specific term includes all technical equivalents which operate in a similar manner to accomplish a similar purpose.

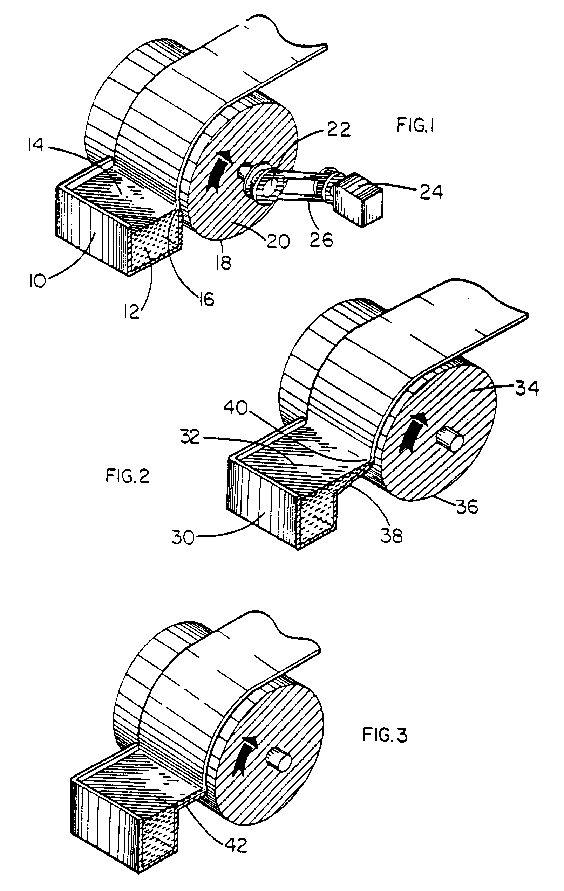

The embodiments shown in Figures 1 to 4 which deal with the production of Films are not covered by the claims. However, they are considered as useful for the understanding of the invention.

### Detailed Description

Fig. 1 illustrates a receptacle 10 which is heated in a conventional manner and contains a pool of molten material 12. However, instead of the walls of the container everywhere extending above the upper surface 14 of the molten material 12, a portion of the container wall is absent in the region above a generally horizontal edge 16 which is formed at the top of a portion of the wall of the receptacle 10. The edge 16 is lower than the top of the other walls of the receptacle 10 so that the molten material level may be raised sufficiently to overflow the molten material over the edge 16.

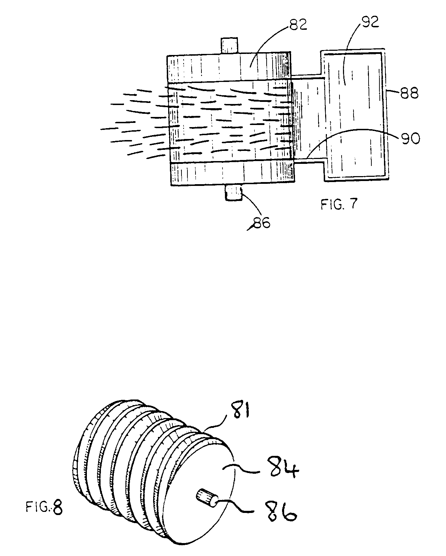

In place of the wall which is missing above the edge 16 there is positioned the peripheral surface 18 of a cylindrical heat extracting substrate 20 which is rotated about its pivot axis 22. The heat extracting substrate 20 is spaced from the edge 16 and is preferably vertically and horizontally adjustable relative to the edge 16 to permit the spacing from the edge to be controllably varied and also to permit adjustment of the angular position about the cylindrical substrate 20 at which the molten material 12 contacts the surface 18 of the substrate 20. The surface 18 of the substrate 20 will be as shown in Fig. 8.

A conventional means such as an electrical motor 24 and connecting drive means 26 are provided for driving the surface 18 of the substrate past the region of its contact with the melt 12. In most applications it is driven at a substrate surface speed in the range of 45.8 to 2440m/min (150 to 8000 feet per minute).

Preferably the overflow edge 16 is linear and the cylindrical substrate 20 is spaced equidistantly from all points along the edge 16. However, the edge may be contoured and the substrate contoured in a mating form to provide contoured products. Further, the spacing of the edge 16 from the substrate surface 18 may be varied along the length of the edge 16 and the edge 16 may be angled slightly from perfectly horizontal in order to provide a resulting product of varying thickness and for otherwise varying the characteristics of the products of the invention.

Fig. 2 illustrates a similar receptacle 30 containing a molten material or melt 32 and a rotating cylindrical substrate 34. However, in order to dispose the surface 36 of the rotating substrate 34 further away from the main portion of the receptacle 30, a trough or lip 38 is formed in the wall of the receptacle 30 to extend outwardly from it. An edge 40 at the outer extremity of the lip 38 is positioned below the other top edges of the receptacle 30 so that the melt 32 may be overflowed against the heat-extracting surface 36 of the substrate 34 to operate in the manner described in connection with Fig.1. The surface 36 will be as shown in Fig. 8.

Fig. 3 illustrates a similar structure in which the lip 42 is essentially horizontal so that the overflow edge has a substantial horizontal width.

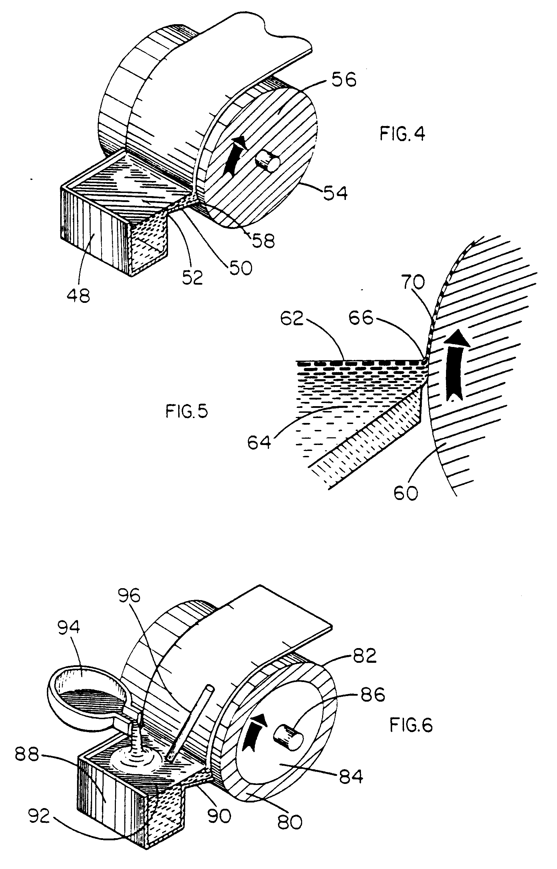

Fig. 4 illustrates yet another embodiment in which the receptacle 48 is formed with a downwardly inclined lip 50. However, in this embodiment of Fig. 4 the edge 52 over which the melted material is overflowed is spaced considerably further from the surface 54 of the heat extracting substrate 56. In this em- bodi ment a secondary edge 58 is formed more nearly adjacent to the substrate 56. The surface 54 will be as shown in Fig. 8.

As illustrated in Fig. 5 and applicable to all embodiments of the invention, the substrate surface 60 is moved along a region of contact or a melt front positioned at an edge of the upper surface 62 of a molten material 64. The heat extracting surface moves generally transversely or obliquely to the plane of the molten material surface 62. An upper meniscus 66 is the upper boundary of the region of contact of the molten material with the surface 60. This upper meniscus is formed adjacent to the upper surface 62 of the molten material 64. The surface 60 will be as shown in Fig. 8.

As illustrated in Fig. 5 the layer of molten material 70 which is formed on the surface 60 is carried upwardly away from the molten material for cooling and removal from the surface 60.

By contacting the molten material with the substrate at an edge of the molten material, the substrate may be positioned away from the main body of the receptacle to permit the receptacle to be covered with an insulative barrier. It also permits the molten material to be contacted by the heat-extracting substrate without the formation of a drop which would be subject to detachment. Further, it permits the shear forces induced by the moving surface 60 in the molten material to be upward and opposite from the downward force of gravity.

The area of the melt front which contacts the heat extracting surface may be controlled by the vertical or horizontal positioning of the rotating substrate and also by control of the height of the surface 62 of the molten material. The height of the melt front is determined by the height of the surface of the molten material above the edge over which the melt is overflowed. Neither the height of the melt front nor the rate at which melt is transported to the moving substrate is significantly dependent upon forces of gravity to move the molten material in any downward direction.

Figs. 6 and 7 illustrate a heat extracting substrate 80 in the form of a cylindrical outer shell 82 having a surface as shown in Fig.8, supported by a carrier body 84 constructed of a material such as iron or steel and provided with axial trunions 86. The substrate 80 is rotated in suitable bearings about its axial trunions 86 by means of a conventional drive such as an electric motor and gear transmission means or other si mi lar well known drive arrangement.

A crucible 88 having a lip 90 provides a suitable receptacle for the molten material 92. The lip or trough 90 delivers an elongated molten edge to the substrate 80 in a position which is somewhat remote from the crucible 88. Molten material is picked up by the surface 82 of the substrate 80 at the elongated edge or melt front, solidified and subsequently removed.

Fig. 6 and Fig. 7 show the manufacture of wire, each having a substrate surface appropriate for producing the desired product.

A fresh supply of molten material may be delivered to the crucible 88 at a controlled rate by a conventional means such as a ladle 94. Alternatively, material such as solid bar stock 96 may be lowered into the molten material at a controlled rate. The introduction of solid material at a controlled rate into the surface of the molten material permits control of the level of the surface of the molten material. Alternatively,of course, level control may be accomplished by controllably raising or lowering a solid body which will not melt at the temperature of the molten material so as to insert or withdraw the body from the liquid and thereby raise or lower its surface level. Preferably, level control of the melt surface above the overflow edge can be accomplished by controlled tilting of the receptacle at a selected angle.

Fig. 8 shows the surface contours formed on the heat extracting substrate which is used with the present invention. As illustrated the cylindrical substrate surface 81 has a helically formed spiral shaped ridge to provide a continuous edge. The ridges may, for example, be machined at a pitch of 28, 32 or 40 ridges per inch. Notching the machine ridges provides discontinuities causing fibers of discrete length to be generated.

The substrate of Fig. 8 fabricates discrete or continuous fibers of material. The substrate of Fig. 8 is utilised because the helical or spiral ridges migrate laterally along the melt front or melt edge. When rotated this helps prevent molten material from flowing into the valleys between the ridges.

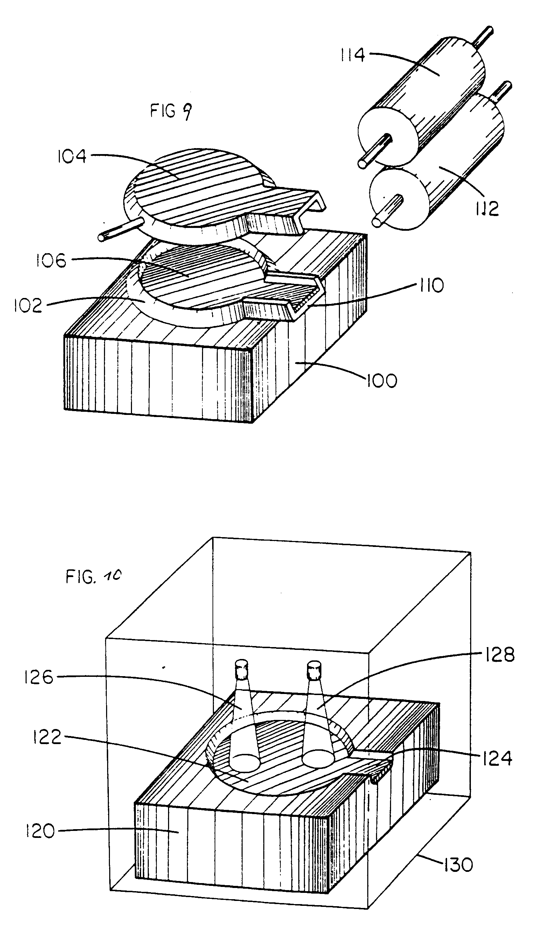

Fig. 9 illustrates a preferred embodiment of the invention in which a furnace 100 has a centrally mounted crucible 102 for heating and melting a material and maintaining it in the molten state. A protective, insulative cover 104 is positioned above the crucible 102 for reducing heat loss and providing a barrier between the molten material 106 and the atmosphere. Agas or electric burner may be mounted within the cover 104 and connected to a suitable source of energy. A trough or lip 110 extends laterally near the top of the crucible 102 in the manner described above. A cylindrical, cooled substrate 112 is positioned against the melt front formed at the outer edge of the trough 110 for forming products directly from the melt in the manner described above. The cooled and solidified melt spontaneously releases or in the alternative lift off structures may be used to insure the removal prior to recontacting the molten source. Awiper roll 114 is rotatably mounted above and in contact with the substrate roll 112 to insure that the molten material which is deposited upon the substrate is removed from the substrate prior to the recontact of the molten material by the substrate's surface.

Fig. 10 illustrates yet another embodiment of the invention in which a hearth 120 has a receptacle formed therein for containing the molten material 122. Afeedertrough 124 forms a lip to permit access of the melt surface to the cylindrical substrate. The material in the receptacle formed in the hearth 120 may be melted and maintained in a molten state by means of directed energy beams 126 and 128 which may, for example, be electron beams, plasma beams, electric arcs, laser beams orthe like. Further, the hearth may be placed in a conventional housing 130 having a controlled atmosphere such as an inert gas or vacuum.

The form of the products produced by the present invention is effected by many other parameters of the embodiments of the invention and their operation. For example, the pressure head or hydrostatic pressure of the overflowed molten material would be dependent upon the height of the surface of the molten material above the overflow edge. Other parameters include the position of the rotating substrate as described above, the type and rate of material feed ie, whether solid rod, solid shot, or molten.

The operation of the embodiments of the invention may be illustrated by the following Examples II and III, Example I being given by way of explanation and not being in accordance with the invention.

### EXAMPLE I

A copper base alloy was melted in an induction furnace configured as in Fig. 4. The induction power supply is operated between 80 and 100 kW to maintain melt and bring the overflow molten material to temperature. A40-50 kW range is preferred for quiet pool leading to the overflow edge during withdrawal. Normally nominal lots of 91 Kg (200 pounds) of copper are melted. The wheel speed has not been directly measured. On the device used to control wheel speed, the settings from 1 to 10 are used with a 25.4 cm (10 inch) diameter wheel, 1500-1800 rpm is the normal range. The position of the wheel, wheel speed, melt temperature, melt surface condition and wheel material, wheel surface condition, wheel surface cleanliness and wheel surface temperature are considered. In the copper base systems of this Example, filaments or fibers (0.0025 by 0.005 cm (1 by 2 thousandths of an inch) have been produced.

### EXAMPLE

Using the same conditions as Example I but with a stainless steel alloy (310) fibers were produced using the substrate form of Fig. 8.

### EXAMPLE III.

A nickel base alloy (60Ni 40Fe) as with steels was melted using 80-120 kW in the induction furnace. The melt was maintained at a temperature at 60-28 kW. During casting the power was reduced to 40kW. The same wheel speeds, as in Example I, were used with the substrate surface form of Figure 8.

A slag gate, not shown, may be used 2.54-5.08cm (1-2 inches) ahead of the overflow edge where slag may be a problem.

## Claims

1. A method for producing filaments or fibers from a molten material, said method comprising rotating a heat extracting substrate (20,34,56,80) about its substantially horizontal axis of symmetry (22,86) and moving its outer surface (18,36,54,60,82) having helically disposed adjacent ridges (81) formed thereon past a region of contact with an edge (16,40,58) forming a melt front of the upper surface of a pool of said molten material (12,32,64,92) so that said molten material (12,32,64,92) solidifies on the outer surface (18,36,54,60,82) and is then removed therefrom, said helically disposed adjacent ridges (81) being caused by the rotation of the substrate (20,34,56,80) to carry out an apparent motion with respect to the surface edge (16,40,58) transversely migrating along a generating line of said substrate (20,34,56,80) interfacing the melt front.

2. A method in accordance with claim 1, characterized in that the surface speed of said substrate is in the range 45.8 to 2440 m/min (150 feet per minute to 8000 feet per minute).

3. An apparatus for producing filaments or fibers from a molten material, the apparatus comprising a receptacle (10,30,48,88,106,122) for containing a pool of molten material (12,32,64,92), said receptacle including a wall portion having an upper generally horizontal edge (16,40,58) forming a melt front relatively lower than the top of said receptacle and over which molten material may be overflowed, a heat extracting substrate (20,34,56,80) spaced from said edge (16,40,58) and mounted to be contacted by the overflowed molten material (12,32,64,92) at the level of the upper surface (62) of the molten material, the substrate being formed as a symmetrical substrate (20,34,56,80) about its axis (22,86) and having helically disposed adjacent ridges (81) formed on the outer surface (18,36,54,60,82) thereof and means for continuously moving the surface (18,36,54,60,82) of said substrate past the region of its contact with said melt (12,32,64,92) by drivingly rotating it about its substantially horizontal axis of symmetry (22,86), said helically disposed adjacent ridges (81) being caused to carry out an apparent motion with respect to the surface edge transversely migrating along a generating line of said substrate interfacing the melt front by the rotation of the substrate (20,34,56,80).

4. An apparatus in accordance with claim 3, characterized in that said edge (16) is linear and said substrate (20) is a rotating, generally cylindrical drum.

5. An apparatus in accordance with claim 4, characterized in that said drum is vertically and horizontally adjustable relative to said edge.

6. An apparatus in accordance with claim 4, characterized in that a lip (38) protrudes from said receptacle and said edge is formed at the outermost end of said lip.

7. An apparatus in accordance with claim 4, characterized in that a lip (50) protrudes from said receptacle (48) and said edge (52) is formed at the inner end of said lip and wherein a second lower edge (58) is formed at the outmost end of said lip near said substrate (56).

8. An apparatus in accordance with any one of claims 4,5,6 or 7, characterized in that a protective cover (104) is mounted to the top of said receptacle.

9. An apparatus in accordance with claim 4, characterized in that said receptacle, and said substrate are housed in a controlled atmosphere enclosure (130).

10. An apparatus in accordance with claim 9, characterized in that means for directing an energy beam (126,128) is mounted in said enclosure (130) for heating said material.

## Patentansprüche

1. Verfahren zur Herstellung von Fäden oder Fasern aus einem schmelzflüssigen Material, bei dem ein wärmeabziehendes Substrat (20, 34, 56, 80) um seine im wesentlichen horizontale Symmetrieachse (22, 86) gedreht und seine Außenfläche (18, 36, 54, 60, 82) mit darauf gebildeten, schraubenförmig angeordneten, benachbarten Stegen (81) an einer Kontaktzone mit einen eine Schmelzfront bildenden Rand (16, 40, 58) der oberen Oberfläche eines Teichs von schmelzflüssigem Material (12, 32, 64, 92) vorbeibewegt wird, so daß das schmelzflüssige Material (12, 32, 64, 92) sich an der Außenfläche (18, 36, 54, 60, 82) verfestigt und danach von dieser entfernt wird, wobei die schraubenförmig angeordneten, benachbarten Stege (81) durch die Drehung des Substrats (20, 34, 56, 80) dazu veranlaßt werden, eine scheinbare Bewegung mit Bezug auf den Flächenrand (16, 40, 58) unter quergerichteter Wanderung entlang einer erzeugenden Linie des Substrats (20, 34, 56, 80), die mit der Schmelzfront eine eine gemeinsame Fläche bildet, durchzuführen.

2. Verfahren nach Anspruch 1, dadurch gekennzeichnet, daß die Oberflächengeschwindigkeit des Substrats im Bereich von 45,8 bis 2440 m/min. (150 Fuß pro Minute bis 8000 Fuß pro Minute) liegt.

3. Vorrichtung zur Herstellung von Fäden oder Fasern aus einem schmelzflüssigen Material, wobei die Vorrichtung ein Behältnis (10, 30, 48, 88, 106, 122) für die Aufnahme eines Teichs des schmelzflüssigen Materials (12, 32, 64, 92) umfaßt, wobei das Behältnis einen Wandabschnitt mit einer oberen im allgemeinen waagerechten Rand (16, 40, 58) aufweist, der eine Schmelzfront, die relativ tiefer liegt als die Oberseite des Behältnisses, bildet, und über das schmelzflüssige Material hinwegfließen kann, wobei ein wärmeabziehendes Substrat (20, 34, 56, 80), das von dem Rand (16, 40, 58) beabstandet ist und angeordnet ist, um von dem überfließenden, schmelzflüssigen Material (12, 32, 64, 92) auf der Höhe der oberen Fläche (62) des schmelzflüssigen Materials berührt zu werden, wobei das Substrat als um seine Achse (22, 96) symmetrisches Substrat (20, 34, 56, 80) ausgebildet ist und schraubenförmig angeordnete, benachbarte Stege (81) aufweist, die an seiner Außenfläche (18, 36, 54, 60, 82) angeordnet sind und eine Einrichtung zum kontinuierlichen Vorbeibewegen der Oberfläche (18, 36, 54, 60, 82) des Substrats an dem Bereich seines Kontakts mit der Schmelze (12, 32, 64, 92) durch das antriebsmäßige Drehen um seine im wesentlichen waagerechte Symmetrieachse (22, 86) aufweist, wobei die schraubenförmig angeordneten, benachbarten Stege (81) dazu veranlaßt werden, durch die Drehung des Substrats (20, 34, 56, 80) eine scheinbare Bewegung mit Bezug auf dem Oberflächenrand durchzuführen, der quer entlang einer erzeugenden Linie des Substrats wandert, die eine gemeinsame Fläche mit der Schmelzfront bildet.

4. Vorrichtung nach Anspruch 3, dadurch gekennzeichnet, daß der Rand (16) linear ist und das Substrat (20) eine sich drehende, im wesentlichen zylindrische Trommel ist.

5. Vorrichtung nach Anspruch 4, dadurch gekennzeichnet, daß die Trommel relativ zu der Kante senkrecht und waagerecht einstellbar ist.

6. Vorrichtung nach Anspruch 4, dadurch gekennzeichnet, daß eine Lippe (38) von dem Behältnis vorsteht und der Rand am äußersten Ende der Lippe ausgebildet ist.

7. Vorrichtung nach Anspruch 4, dadurch gekennzeichnet, daß eine Lippe (50) von dem Behältnis (48) vorsteht und der Rand (52) an dem inneren Ende der Lippe ausgebildet ist und daß ein zweiter unterer Rand (58) am äußersten Ende der Lippe in der Nähe des Substrats (56) ausgebildet ist.

8. Vorrichtung nach einem der Ansprüche 4, 5, 6 oder 7, dadurch gekennzeichnet, daß eine Schutzabdeckung (104) an der Oberseite des Behältnisses angeordnet ist.

9. Vorrichtung nach Anspruch 4, dadurch gekennzeichnet, daß das Behältnis und das Substrat in einem Raum (130) mit einer geregelten Atmosphäre untergebracht sind.

10. Vorrichtung nach Anspruch 9, dadurch gekennzeichnet, daß eine Einrichtung zum Führen eines Energiestrahles (126, 128) in dem Raum (130) angeordnet ist, um das Material zu erwärmen.

## Revendications

1. Procédé de fabrication de filaments ou fibres à partir d'une matière en fusion, ledit procédé comprenant les opérations consistant à faire tourner un substrat d'extraction de chaleur (20, 34, 56, 80) autour de son axe de symétrie sensiblement horizontal (22, 86) et à faire franchir à sa surface extérieure (18, 36, 54, 60, 82) sur laquelle sont façonnées des nervures voisines disposées en hélice (81), une région de contact avec un bord (16, 40, 58) formant le front de la matière en fusion de la surface supérieure d'un bain de ladite matière en fusion (12, 32, 64, 92) de façon que ladite matière en fusion (12, 32, 64, 92) se solidifie sur la surface extérieure (18, 36, 54, 60, 82) et soit ensuite évacuée de celle-ci, lesdites nervures voisines disposées en hélice (81) étant amenée de par la rotation du substrat (20, 34, 56, 80) à décrire par rapport au bord de surface (16, 40, 58) un mouvement apparent de migration transversale suivant une génératrice dudit substrat (20, 34, 56, 80) située à l'interface avec le front de la matière en fusion.

2. Procédé selon la revendication 1, caractérisé en ce que la vitesse superficielle dudit substrat est comprise entre 45,80 et 2440 m/min. (150 feet par minute et 8000 feet par minute).

3. Appareil de fabrication de filaments ou fibres à partir de matière en fusion, l'appareil comprenant un réceptacle (10, 30,48, 88,106,122) destiné à contenir un bain de matière en fusion (12, 32, 64, 92), ledit réceptacle comportant une partie de paroi ayant un bord supérieur dans l'ensemble horizontal (16, 40, 58) formant le front de la matière en fusion situé plus bas que le sommet dudit réceptacle et pardessus lequel on peut faire déborder de la matière en fusion, un substrat d'extraction de chaleur (20, 34, 56, 80) espacé dudit bord (16, 40, 58) et monté en sorte d'être rencontré par la matière en fusion qui déborde (12, 32, 64, 92) au niveau de la surface supérieure (62) de la matière en fusion, le substrat étant façonné sous forme de substrat (20, 34, 56, 80) symétrique par rapport à son axe (22, 86) et comportant des nervures voisines disposées en hélice (81) façonnées sur sa surface extérieure (18,36, 54, 60, 82) et un moyen faisant défiler en continu la surface (18, 36, 54, 60, 82) dudit substrat devant sa région de contact avec ladite matière en fusion (12, 32, 64, 92) en la faisant tourner autour de son axe de symétrie sensiblement horizontal (22, 86) lesdites nervures voisines disposées en hélice (81) étant amenées à décrire par rapport au bord de surface un mouvement apparent de migration transversale suivant une génératrice dudit substrat située à l'interface avec le front de la matière en fusion par rotation du substrat (20, 34, 56, 80).

4. Appareil selon la revendication 3, caractérisé en ce que ledit bord (16) est rectiligne et ledit substrat (20) est un tambour tournant de forme générale cylindrique.

5. Appareil selon la revendication 4, caractérisé en ce que ledit tambour est réglable verticalement et horizontalement par rapport audit bord.

6. Appareil selon la revendication 4, caractérisé en ce qu'une lèvre (38) fait saillie sur ledit réceptacle et ledit bord est façonné à l'extrémité extérieure de ladite lèvre.

7. Appareil selon la revendication 4, caractérisé en ce qu'une lèvre (50) fait saillie sur ledit réceptacle (48) et ledit bord (52) est façonné à l'extrémité intérieure de ladite lèvre et dans lequel un second bord inférieur (58) est façonné à l'extrémité extérieure de ladite lèvre près dudit substrat (56).

8. Appareil selon l'une quelconque des revendications 4, 5, 6 ou 7, caractérisé en ce qu'un couvercle protecteur (104) est monté sur le sommet dudit réceptacle.

9. Appareil selon la revendication 4, caractérisé en ce que ledit réceptacle, et ledit substrat sont logés dans une enceinte sous atmosphère contrôlée (130).

10. Appareil selon la revendication 9, caractérisé en ce qu'un moyen de projection d'un faisceau d'énergie (126, 128) est monté dans ladite enceinte (130) pour chauffer ladite matière.
